# EUROPÄISCHE PATENTSCHRIFT

(11) **EP 4 433 724 B1**
(45) Veröffentlichungstag und Bekanntmachung des Hinweises auf die Patenterteilung: **05.08.2026**
(21) Anmeldenummer: 22782835.7
(22) Anmeldetag: 16.09.2022
(51) Int. Cl.: F16H 55/36, B22F 10/00, B22F 10/10, F16H 55/48

(54) **BANDSPANNROLLEN-SET UND VERFAHREN ZUR HERSTELLUNG VON BANDSPANNROLLEN**
BELT TENSIONING ROLLER SET AND METHOD FOR PRODUCING BELT TENSIONING ROLLERS
ENSEMBLE DE GALETS TENDEURS DE COURROIE ET PROCÉDÉ DE PRODUCTION DE GALETS TENDEURS DE COURROIE

(30) Priorität: 18.11.2021 DE 102021130125
(43) Veröffentlichungstag der Anmeldung: 25.09.2024
(73) Patentinhaber: Schaeffler Technologies AG & Co. KG, 91074 Herzogenaurach (DE)
(72) Erfinder: HORN, Maik, 96129 Strullendorf (DE); STROHMEYER, Christoph, 90425 Nürnberg (DE); HOFMANN, Harald, 91074 Herzogenaurach (DE); PAPKE, Thomas, 90607 Rückersdorf (DE); BARTELS, Dominic, 91052 Erlangen (DE)
(74) Vertreter: Schaeffler Technologies
(86) Internationale Anmeldenummer: PCT/DE2022/100694
(87) Internationale Veröffentlichungsnummer: WO 2023/088510

(56) Entgegenhaltungen:
- DE-A1- 102011 003 020
- DE-A1- 102015 118 194
- DE-A1- 102018 115 434
- DE-A1- 102019 132 263

## Beschreibung

Die Erfindung betrifft ein Verfahren zur Herstellung von Bandspannrollen, welches die generative Fertigung mindestens eines Teils der Bandspannrolle umfasst. Ferner betrifft die Erfindung ein Set aus zumindest teilweise generativ gefertigten Bandspannrollen für Zugmitteltriebe.

Die DE 10 2019 132 263 A1, welche den nächstkommenden Stand der Technik darstellt, offenbart ein Verfahren zur additiven Herstellung einer Bandspannrolle für einen Zugmitteltrieb. Ein Ringelement der Bandspannrolle weist eine zur Kontaktierung eines Riemens, das heißt Zugmittels, vorgesehene Außenumfangsfläche und eine zur Aufnahme eines Lagers vorgesehene Innenumfangsfläche auf. Zumindest ein Teil des Ringelements ist additiv, das heißt generativ, hergestellt und weist Nanopartikel auf. Die Nanopartikel können inhomogen in dem additiv hergestellten Teil des Ringelements verteilt sein und einen keramischen Anteil aufweisen. Als Fertigungstechnologie wird in der DE 10 2019 132 263 A1 ein pulverbasiertes additives Fertigungsverfahren vorgeschlagen.

Die DE 38 31 769 A1 beschreibt eine Rolle für einen Riementrieb, welche einen Träger aus einem elektrisch nichtleitenden polymeren Werkstoff sowie einen ringförmigen Metallkörper umfasst. Eine Kontaktfläche für einen Riemen, welcher über die Rolle läuft, wird durch einen elektrisch leitenden Werkstoff bereitgestellt, der elektrisch mit dem ringförmigen Metallkörper verbunden ist.

Aus der DE 10 2006 039 363 A1 ist eine Bandspannrolle mit einer PVD-Beschichtung bekannt. Die PVD-Beschichtung befindet sich auf einer zur Kontaktierung eines Riemens vorgesehenen Lauffläche der Bandspannrolle, wobei auch weitere Bauteile, einschließlich einer Lagerung der Bandspannrolle, PVD-beschichtet sein können.

Die DE 10 2011 003 020 A1 offenbart eine Spann- und/oder Umlenkrolle aus Kunststoff mit einer nanokristallinen Beschichtung. Die Beschichtung befindet sich zumindest abschnittsweise auf einer Außenumfangsfläche eines aus Kunststoff gefertigten Hauptkörpers der Spann- und/oder Umlenkrolle, welche für die Verwendung in einem Zugmitteltrieb vorgesehen ist.

Die DE 10 2009 038 220 A1 hat eine Bandspannrolle mit integrierter Ölfangeinheit zum Gegenstand. Als mögliche Fertigungstechnologien für die Herstellung von Komponenten von Bandspannrollen sind in der DE 10 2009 038 220 A1 Kunststoffspritzguss sowie das spanlose Umformen von Blech erwähnt.

Die DE 10 2018 115 434 A1 beschreibt eine Herstellungscomputereinrichtung zum dynamischen Anpassen der Additivherstellung eines Teils, welche eingerichtet ist, ein Modell des Teils aufweisend eine Mehrzahl an Aufbauparametern zu speichern.

Die DE 10 2015 118 194 A1 offenbart eine Umlenkrolle für einen Zugmitteltrieb, insbesondere einen Riementrieb, mit einem Umlenkrollenkörper aufweisend eine Riemenlauffläche, eine Stirnseite und eine Rückseite. Die Stirnseite und die Rückseite sind über Durchlässe miteinander verbunden, in oder an welchen ein Verdichterelement fest angeordnet ist.

Der Erfindung liegt die Aufgabe zu Grunde, gegenüber dem genannten Stand der Technik Fortschritte bei der Herstellung von Bandspannrollen zu erzielen, wobei eine besonders hohe Flexibilität der Fertigung angestrebt wird.

Diese Aufgabe wird erfindungsgemäß gelöst durch ein Verfahren zur Herstellung von Bandspannrollen gemäß Anspruch 1. Ebenso wird die Aufgabe gelöst durch ein aus Bandspannrollen gebildetes Set gemäß Anspruch 6. Im Folgenden im Zusammenhang mit der Vorrichtung, das heißt dem Bandspannrollen-Set, erläuterte Ausgestaltungen und Vorteile der Erfindung gelten sinngemäß auch für das Herstellungsverfahren, das heißt die generative Fertigung, und umgekehrt.

Das Herstellungsverfahren geht von einer einheitlichen Rollen-Grundform der Bandspannrollen aus. Auf dieser Basis sind durch verschiedene Modifikationen unterschiedliche, jeweils mindestens eine Verstärkung aufweisende Grundkörper von Bandspannrollen generativ herstellbar.

Das Bandspannrollen-Set umfasst eine Mehrzahl unterschiedlicher, jeweils durch das Verfahren nach Anspruch 1 additiv hergestellter Grundkörper, welche zur Aufnahme eines in einer Innenwandung des Grundkörpers gehaltenen Wälzlagers, insbesondere Kugellagers, vorgesehen sind, wobei jeder Grundkörper zwei Hohlräume mit torusförmiger Grundform, nämlich einen äußeren, durch eine Bandauflagewandung begrenzten Hohlraum sowie einen inneren, durch die Innenwandung begrenzten Hohlraum, aufweist.

Durch die verschiedenen, mit geringem Aufwand realisierbaren Abwandlungen der Rollengrundform kann eine Vielzahl unterschiedlicher, jeweils beanspruchungsgerecht ausgelegter Bandspannrollen bereitgestellt werden. Insbesondere können damit auch kleine Serien, aufbauend auf einem einheitlichen Grundkonzept, rationell gefertigt werden. Von besonderem Vorteil ist die Tatsache, dass keine Überdimensionierung von Rollen erforderlich ist, welche mit unnötig hohen Massen und Trägheitsmomenten verbunden wäre. Umgekehrt können im Fall von Kleinserien, bei welchen eine besonders hohe Materialbeanspruchung gegeben ist, beispielsweise im Motorsport, durch die Anpassung von Verstärkungen ausreichende Reserven, was die Belastbarkeit betrifft, zur Verfügung gestellt werden, wobei auch in einem solchen Fall eine Überdimensionierung von Bauteilen sinnvollerweise vermieden wird.

Verstärkungen des Grundkörpers von Bandspannrollen können insbesondere in Form von Verstärkungsstegen vorliegen. Zusätzlich oder alternativ sind Verstärkungen in Form einer Erhöhung der Wandstärke realisierbar. In beiden Fällen ist der Grundkörper generativ aus einem pulverförmigen Material aufbaubar, wobei im Grundkörper Öffnungen zur Entpulverung, welche in Richtung zur Mittelachse des Grundkörpers offen sind, ausgespart bleiben. Die Öffnungen zur Entpulverung können insbesondere oval und trichterförmig gestaltet werden und dafür sorgen, dass möglichst wenig Pulver in Ecken von Hohlräumen verbleibt und Erweiterungsmöglichkeiten durch Verstärkungsstege allenfalls minimal beeinflusst werden.

Statt eines pulverförmigen Materials kann grundsätzlich auch ein Filament zum Aufbau des Grundkörpers verwendet werden, wobei das Filamentmaterial einheitlich oder materialuneinheitlich, insbesondere mit Verstärkungsfasern, aufgebaut sein kann.

Einzelne Rollen des Bandspannrollen-Sets können Verstärkungsstege insbesondere im äußeren Hohlraum des Grundkörpers aufweisen. Was die Form und Anordnung dieser Verstärkungsstege betrifft, existieren zahlreiche Variationsmöglichkeiten. Insbesondere können in Umfangsrichtung des äußeren Hohlraums alternierend verschiedene Verstärkungsstege angeordnet sein.

Für die Aufnahme besonders hoher radialer Kräfte kann sich jeweils in Verlängerung einer Verstärkung des äußeren Hohlraums eine zusätzliche, bis zur Innenwandung reichende Verstärkung außerhalb beider Hohlräume befinden. Gerade die zusätzlichen Verstärkungsstege tragen dazu bei, auch ungleichförmige Belastungen, beispielsweise Belastungen, die in der Nähe der einen Stirnseite der Bandspannrolle wesentlich stärker als in der Nähe der anderen Stirnseite sind, aufzunehmen.

Gemäß verschiedener möglicher Weiterbildungen kann der Grundkörper der Bandspannrolle einseitig oder beidseitig einen Bord an seiner Bandauflagewandung aufweisen. Die Anbringung der Borde im Rahmen der generativen Fertigung, das heißt des 3D-Drucks, ist unabhängig davon, auf welche der beschriebenen Arten der Grundkörper der Bandspannrolle verstärkt ist. Ein einseitiger Bord kann auf fertigungsfreundliche Weise derart angebracht werden, dass Überhänge vermieden werden und somit von zusätzlichen stützenden Strukturen zum Abstützen während der generativen, schichtweisen Fertigung abgesehen werden kann, ohne Einbußen hinsichtlich Maßhaltigkeit in Kauf nehmen zu müssen. Die Minimierung des Volumens des 3D-Druckteils, welche zugleich die Notwendigkeit von Nacharbeiten beseitigt oder zumindest einschränkt, trägt auch zu einer Reduktion der Fertigungszeit bei.

Nachfolgend werden mehrere Ausführungsbeispiele der Erfindung anhand einer Zeichnung näher erläutert. Hierin zeigen:
- Fig. 1: ein erstes Ausführungsbeispiel eines Grundkörpers einer Bandspannrolle für einen Riementrieb in einer Schnittdarstellung,
- Fig. 2: die Anordnung von Verstärkungsstegen im Grundkörper der Bandspannrolle nach Figur 1,
- Fig. 3 bis 10: weitere Ausführungsformen von Grundkörpern von Bandspannrollen in Darstellungen analog Figur 1 und 2,
- Fig. 11: einen Grundkörper einer Bandspannrolle, welcher im Vergleich zu den Varianten nach den Figuren 1 bis 10 zusätzliche, äußere Verstärkungsstege aufweist,
- Fig. 12: eine aus einem Wälzlager sowie dem Grundkörper nach Figur 11 aufgebaute Bandspannrolle,
- Fig. 13: einen Grundkörper einer Bandspannrolle mit im Vergleich zu den Ausführungsformen nach den Figuren 1 bis 12 erhöhter Wandstärke,
- Fig. 14: die unverstärkte Grundform eines Grundkörpers einer Bandspannrolle,
- Fig. 15: einen Grundkörper einer Bandspannrolle mit einem einzigen Bord,
- Fig. 16: einen Grundkörper einer Bandspannrolle mit zwei Borden,
- Fig. 17: einen weiteren Grundkörper einer Bandspannrolle in perspektivischer geschnittener Ansicht,
- Fig. 18: den Grundkörper nach Figur 17 in einer Schnittdarstellung.

Die folgenden Erläuterungen beziehen sich, soweit nicht anders angegeben, auf sämtliche Ausführungsbeispiele. Einander entsprechende oder prinzipiell gleichwirkende Teile sind in allen Figuren mit den gleichen Bezugszeichen gekennzeichnet.

Eine Bandspannrolle 1 umfasst einen aus einem pulverförmigen Ausgangsstoff, sei es auf Kunststoff- oder Metallbasis, generativ gefertigten Grundkörper 2 und ein im Grundkörper 2 gehaltenes Wälzlager 10, nämlich Kugellager. Das Wälzlager 10 weist einen Außenring 11, eine Mehrzahl an Kugeln als Wälzkörper 12, sowie einen Innenring 13 auf. Ein Käfig zur Führung der Kugeln 12 ist ebenso wie Dichtungen zur Abdichtung des Wälzlagers 10 nicht dargestellt. Der Außenring 11 des Wälzlagers 10 kontaktiert eine Innenwandung 6, welche der insgesamt mit 4 bezeichneten Wandung des Grundkörpers 2 zuzurechnen ist. Die Innenwandung 6 begrenzt einen inneren Hohlraum 5 des Grundkörpers 2. Darüber hinaus ist im Grundkörper 2 ein äußerer Hohlraum 7 ausgebildet, welcher unter anderem durch eine Bandauflagewandung 8 begrenzt ist, auf welcher beim Betrieb der Bandspannrolle 1 ein Riemen aufliegt. Die Bandauflagewandung 8 weist, wie aus den Figuren hervorgeht, eine ballige Form auf.

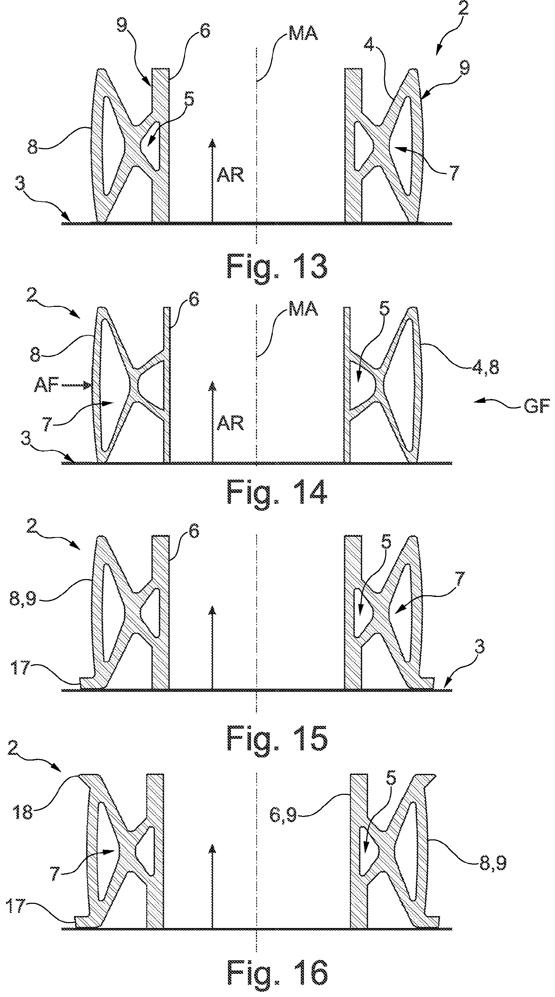

Bei der generativen Fertigung des Grundkörpers 2 wird dieser in einer Aufbaurichtung AR, ausgehend von einer Auflagefläche 3, aus einem pulverförmigen Material aufgebaut. Sämtliche Varianten des Grundkörpers 2 basieren auf einer Grundform GF, welche ohne jegliche Modifikationen in Figur 14 dargestellt ist. Die Mittelachse des Grundkörpers 2 ist mit MA bezeichnet.

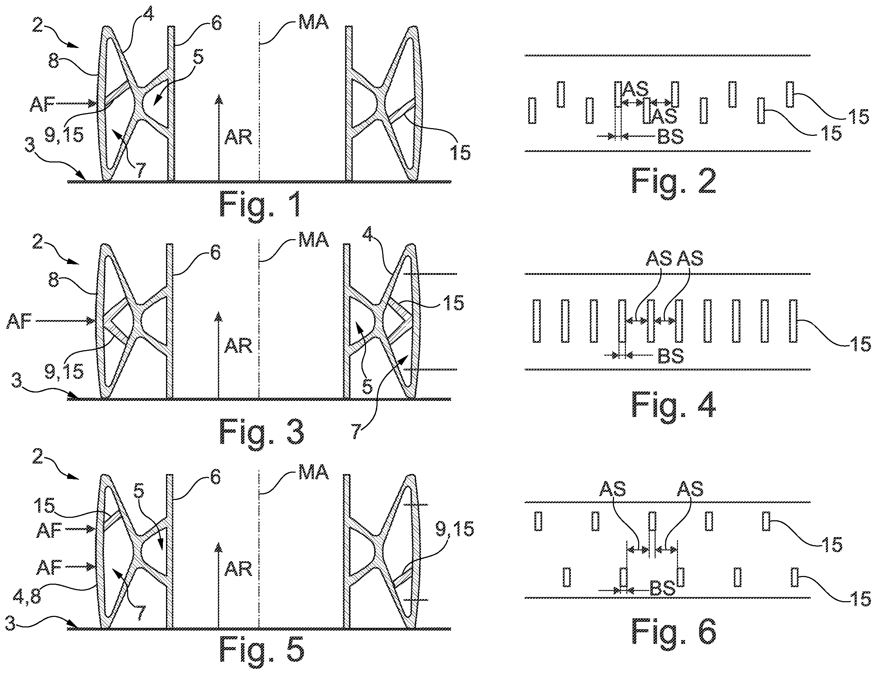

Beim Betrieb der Bandspannrolle 1 treten Auflagekräfte AF auf, mit welchen die Bandauflagewandung 8 belastet wird. Je nach veranschlagter Größe der Auflagekräfte AF weist der Grundkörper 2 geeignete Verstärkungen 9 auf. Die Verstärkungen 9 sind in Form von Verstärkungsstegen 14, 15 (Figur 1 bis 12) oder in Form von Wandungsverstärkungen (Figur 13, 14 bis 18) gegeben. Möglich ist auch die Kombination verstärkter Wandungen 4 und zusätzlicher Verstärkungsstege 14, 15. Ein Set an Bandspannrollen 1 umfasst in unterschiedlicher Art verstärkte Grundkörper 2, wobei auch eine Bandspannrolle 1 mit dem Grundkörper 2 in unverstärkter Grundform GF Bestandteil des Sets sein kann.

In den Ausführungsformen nach den Figuren 1 bis 10 sind Verstärkungsstege 15 ausschließlich im äußeren Hohlraum 7 zu finden. Aufgrund der Anordnung der Verstärkungsstege 15 innerhalb des Hohlraums 7 wird in diesem Fall von inneren Verstärkungsstegen 15 gesprochen. Im inneren Hohlraum 5 befinden sich in keinem der Ausführungsbeispiele verstärkende Stege.

Die Figuren 2, 4, 6, 8, 10 zeigen in abgewickelter Anordnung die Verstärkungsstege 15 der zugehörigen, auf den Zeichnungsblättern jeweils links zu findenden Grundkörper 2 nach den Figuren 1, 3, 5, 7, 9. Die in Umfangsrichtung zu messende Breite eines jeden Verstärkungssteges 14, 15 ist in allen Fällen mit BS angegeben. AS gibt den in derselben Richtung zu messenden Abstand zwischen zwei benachbarten Verstärkungsstegen 14, 15 an.

Wie aus den Figuren 1 und 2 hervorgeht, sind verschiedene Positionen von Verstärkungsstegen 15 innerhalb des äußeren Hohlraums 7 gegeben, wobei in Umfangsrichtung des äußeren Hohlraums 7 und damit des gesamten Grundkörpers 2 nicht nur die Position der Verstärkungsstege 15 in axialer Richtung, sondern auch deren Schrägstellung alterniert. Im Fall von Figur 1 und Figur 2 schneidet eine gedachte, zwischen den Stirnseiten des Grundkörpers 2 liegenden Mittelebene der Bandspannrolle 1 sämtliche Verstärkungsstege 15, wobei die einzelne Verstärkungsstege 15 abwechselnd näher an der einen und näher an der anderen Stirnseite des Grundkörpers 2 angeordnet sind.

Im Ausführungsbeispiel nach den Figuren 3 und 4 haben sämtliche Verstärkungsstege 15 eine einheitliche, zur Mittelebene des Grundkörpers 2 symmetrische Form, welche im Querschnitt als V-Form erscheint. Das zusätzliche in Form der Verstärkungsstege 15 in den Grundkörper 2 im Vergleich zur Grundform GF eingebrachte Material ist im Fall der Figuren 3 und 4 größer als im Fall der Figuren 1 und 2.

Ein nochmals geringerer Materialzuwachs als im Fall der Figuren 1 und 2 ist im Fall der Figuren 5 und 6 gegeben. Hierbei befinden sich die Verstärkungsstege 15 näher an den Stirnseiten des Grundkörpers 2, sodass die durch den Grundkörper 2 gelegte Mittelebene keinen der Verstärkungsstege 15 schneidet.

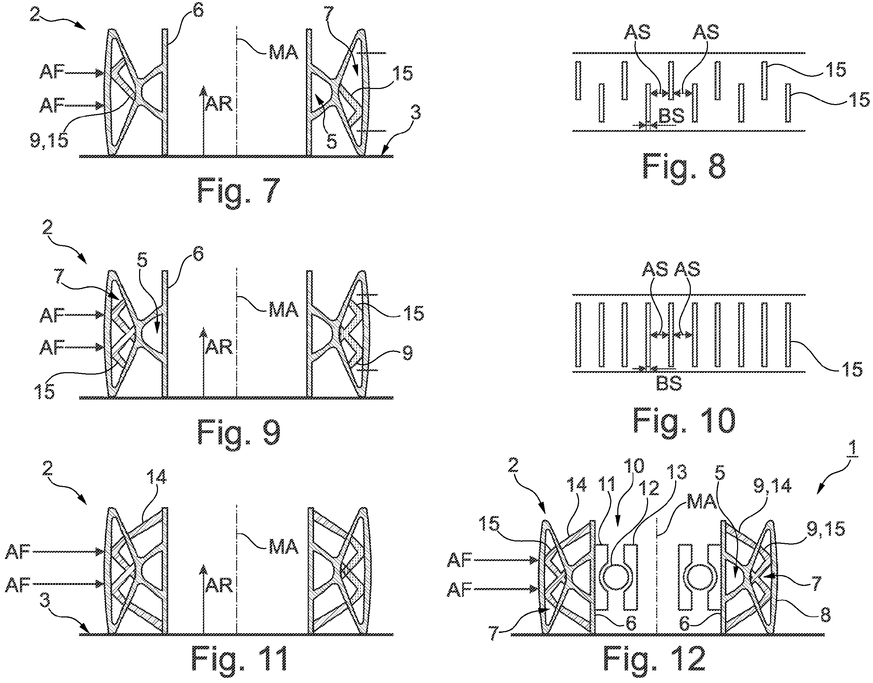

Im Fall von Figur 7 und Figur 8 ist sowohl eine asymmetrische Anordnung der Verstärkungsstege 15 als auch eine V-Form eines jeden einzelnen Verstärkungsstegs 15 gegeben. Die Variante nach den Figuren 7 und 8 stellt somit eine Fusion der Varianten nach den Figuren 1 und 2 sowie 5 und 6 einerseits und der Variante nach den Figuren 3 und 4 andererseits dar. Jeder V-förmige Verstärkungssteg 15 weist im Fall von Figur 7 und 8 zwei unterschiedlich lange V-Schenkel auf.

Unsymmetrische V-Formen sind auch bei den Verstärkungsstegen 15 der Variante nach den Figuren 9 und 10 erkennbar, wobei in diesem Fall jeweils zwei V-Formen zu einem W-förmigen Verstärkungssteg 15 verschmolzen sind.

Die Variante nach den Figuren 11 und 12 stellt eine Abwandlung der Bauform nach den Figuren 9 und 10 dar, wobei zusätzlich zu den inneren Verstärkungsstegen 15 äußere Verstärkungsstege 14, welche sich außerhalb der Hohlräume 5, 7 befinden, erkennbar sind. Aus den Figuren 11 und 12 geht hervor, dass jeder äußere Verstärkungssteg 14 eine Verlängerung eines inneren Verstärkungsstegs 15 darstellt.

In jeder der Bauformen nach den Figuren 13, 15 bis 18 sind die Verstärkungen 9 ausschließlich in Form von Wandungsverstärkungen ausgebildet. Die Bauform nach Figur 15 unterscheidet sich von der Bauform nach Figur 13 durch einen einseitig angeformten Bord 17. Im Fall von Figur 16 ist zusätzlich ein zweiter Bord 18 vorhanden, dessen Querschnittsgestaltung sich vom Bord 17 unterscheidet.

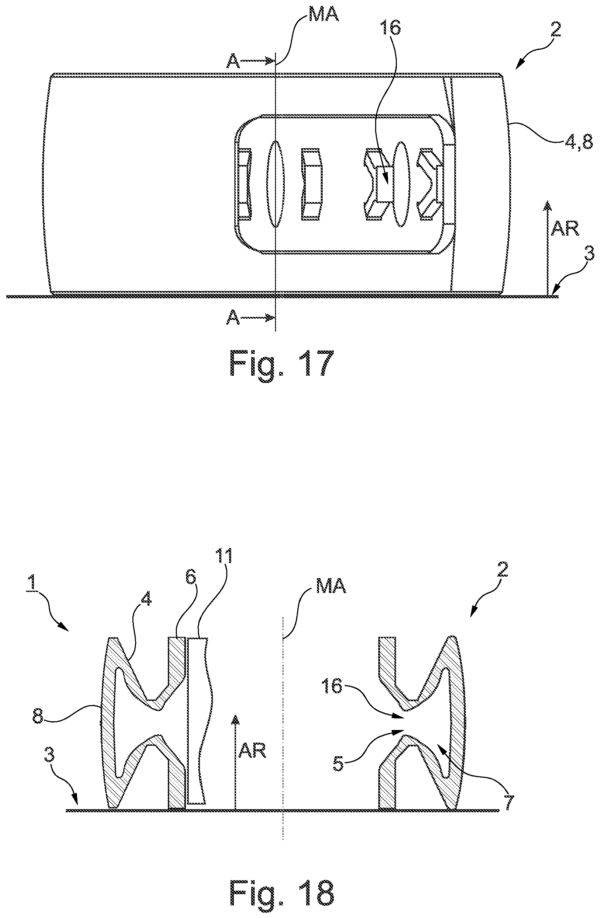

Die äußere Form der Variante nach den Figuren 17 und 18 entspricht der Form des Grundkörpers 2 nach Figur 13. Zusätzlich sind in den Figuren 17 und 18 Öffnungen 16 im Grundkörper 2 erkennbar, welche eine Entpulverung im Rahmen der generativen Fertigung ermöglichen. Zum selben Zweck können auch Öffnung in den Grundkörpern 2 der übrigen, bereits erläuterten Varianten vorhanden sein. Ebenso ist es möglich, Teilbereiche der Wandungen 4, insbesondere den der Innenwandung 6 zugewandten Wandungsabschnitt des äußeren Hohlraums 7, nicht als geschlossene Fläche, sondern als Gitter auszuführen. Entsprechendes gilt für der Innenwandung 6 abgewandte Wandungsabschnitte des inneren Hohlraums 5.

### Bezugszeichenliste

- 1: Bandspannrolle
- 2: Grundkörper
- 3: Auflagefläche
- 4: Wandung
- 5: innerer Hohlraum
- 6: Innenwandung
- 7: äußerer Hohlraum
- 8: Bandauflagewandung
- 9: Verstärkung
- 10: Wälzlager
- 11: Außenring
- 12: Wälzkörper
- 13: Innenring
- 14: äußerer Verstärkungssteg
- 15: innerer Verstärkungssteg
- 16: Öffnung im Grundkörper
- 17: Bord
- 18: Bord

- AF: Auflagekraft
- AR: Aufbaurichtung
- AS: Abstand zwischen zwei Stegen
- BS: Breite eines Steges
- GF: Grundform
- MA: Mittelachse

## Patentansprüche

1. Verfahren zur Herstellung von Bandspannrollen (1) mit jeweils einem Grundkörper (2) aufweisend eine Mittelachse (MA), welcher zur Aufnahme eines in einer Innenwandung (6) des Grundkörpers (2) gehaltenen Wälzlagers (10) vorgesehen ist, **dadurch gekennzeichnet, dass** jeder Grundkörper (2) zwei Hohlräume (5, 7) mit torusförmiger Grundform, nämlich einen äußeren, durch eine Bandauflagewandung (8) begrenzten Hohlraum (7) sowie einen inneren, in Richtung der Mittelachse (MA) durch die Innenwandung (6) begrenzten Hohlraum (5), aufweist, wobei der äußere Hohlraum (7) ausgehend von der Mittelachse (MA) auf den inneren Hohlraum (5) radial folgend angeordnet wird, wobei basierend auf einer solchen einheitlichen Rollen-Grundform (GF), durch verschiedene Modifikationen der Rollen-Grundform (GF) unterschiedliche, jeweils mindestens eine Verstärkung (9, ) aufweisende Grundkörper (2) von Bandspannrollen (1) generativ gefertigt werden.

2. Verfahren nach Anspruch 1, **dadurch gekennzeichnet, dass** verschiedene Verstärkungen (9) in Form von die Rollen-Grundform (GF) ergänzenden inneren Verstärkungsstegen ( 15) im äußeren Hohlraum (7) hergestellt werden.

3. Verfahren nach Anspruch 2, **dadurch gekennzeichnet, dass** mindestens eine Verstärkung (9) in Form von die Rollen-Grundform (GF) ergänzenden äußeren Verstärkungsstegen (14) hergestellt wird, welche sich außerhalb der Hohlräume (5, 7) befinden und jeder äußere Verstärkungssteg (14) eine Verlängerung eines inneren Verstärkungsstegs (15) ausbildet.

4. Verfahren nach einem der Ansprüche 1 bis 3, **dadurch gekennzeichnet, dass** mindestens eine Verstärkung (9) in Form einer Wandstärkenerhöhung realisiert wird.

5. Verfahren nach einem der Ansprüche 1 bis 4, **dadurch gekennzeichnet, dass** der Grundkörper (2) aus einem pulverförmigen Material aufgebaut wird, wobei im Grundkörper (2) Öffnungen (16) zur Entpulverung, welche in Richtung zur Mittelachse (MA) des Grundkörpers (2) offen sind, ausgespart bleiben.

6. Set aus Bandspannrollen (1), umfassend eine Mehrzahl unterschiedlicher, jeweils durch das Verfahren nach einem der Ansprüche 1 bis 5 hergestellter Grundkörper (2), welche zur Aufnahme eines in einer Innenwandung (6) des Grundkörpers (2) gehaltenen Wälzlagers (10) vorgesehen sind, **dadurch gekennzeichnet, dass** jeder Grundkörper (2) zwei Hohlräume (5, 7) mit torusförmiger Grundform, nämlich einen äußeren, durch eine Bandauflagewandung (8) begrenzten Hohlraum (7) sowie einen inneren, in Richtung der Mittelachse (MA) durch die Innenwandung (6) begrenzten Hohlraum (5), aufweist, wobei der äußere Hohlraum (7) ausgehend von der Mittelachse (MA) des Grundkörpers (2) auf den inneren Hohlraum (5) radial folgend angeordnet ist.

7. Bandspannrollen-Set nach Anspruch 6, **dadurch gekennzeichnet, dass** sich zumindest bei einer der Bandspannrollen (1) eine Verstärkung (9) des Grundkörpers (2) in Form von inneren Verstärkungsstegen (15) im äußeren Hohlraum (7) befindet.

8. Bandspannrollen-Set nach Anspruch 7, **dadurch gekennzeichnet, dass** in Umfangsrichtung des äußeren Hohlraums (7) alternierend verschiedene Verstärkungen (15) in diesem Hohlraum (7) ausgebildet sind.

9. Bandspannrollen-Set nach Anspruch 7 oder 8, **dadurch gekennzeichnet, dass** sich jeweils in Verlängerung eines inneren Verstärkungssteges (15) des äußeren Hohlraums (7) ein zusätzlicher, bis zur Innenwandung (6) reichender äußerer Verstärkungssteg (14) außerhalb beider Hohlräume (5, 7) befindet.

10. Bandspannrollen-Set nach einem der Ansprüche 6 bis 9, **dadurch gekennzeichnet, dass** zumindest einer der Grundkörper (2) einen einseitigen Bord (17) an seiner Bandauflagewandung (8) aufweist.

11. Bandspannrollen-Set nach einem der Ansprüche 6 bis 10, **dadurch gekennzeichnet, dass** zumindest einer der Grundkörper (2) beidseitig Borde (17, 18) an seiner Bandauflagewandung (8) aufweist.

## Claims

1. A method for producing belt tensioning rollers (1), with each base body (2) having a central axis (MA), which is provided for receiving a rolling bearing (10) held in an inner wall (6) of the base body (2), **characterised in that** each base body (2) has two cavities (5, 7) with a torus-shaped basic form, namely an outer cavity (7) delimited by a belt-supporting wall (8) and an inner cavity (5) delimited in the direction of the central axis (MA) by the inner wall (6), wherein the outer cavity (7) is arranged radially from the central axis (MA) towards the inner cavity (5), wherein, based on such a standardised roller basic form (GF), different base bodies (2) of belt tensioning rollers (1), each having at least one reinforcement (9), are generatively produced by means of various modifications to the roller basic form (GF).

2. The method according to claim 1, **characterised in that** various reinforcements (9) in the form of inner reinforcing ribs (15) supplementing the roller basic form (GF) are produced in the outer cavity (7).

3. The method according to claim 2, **characterised in that** at least one reinforcement (9) is produced in the form of outer reinforcing ribs (14) that complement the roller basic form (GF), which ribs are located outside the cavities (5, 7), and each outer reinforcing rib (14) forms an extension of an inner reinforcing rib (15).

4. The method according to any one of claims 1 to 3, **characterised in that** at least one reinforcement (9) is realised in the form of a wall thickness increase.

5. The method according to any one of claims 1 to 4, **characterised in that** the base form (2) is constructed from a powdered material, wherein openings (16) for powder removal, which are open in the direction of the central axis (MA) of the base body (2), are left as recesses in the base body (2).

6. A set of belt tensioning rollers (1), comprising a plurality of different base bodies (2), each produced by the method according to any one of claims 1 to 5, which are provided for receiving a rolling bearing (10) held in an inner wall (6) of the base body (2), **characterised in that** each base body (2) has two cavities (5, 7) with a torus-shaped basic form, namely an outer cavity (7) delimited by a belt-supporting wall (8) and an inner cavity (5) delimited in the direction of the central axis (MA) by the inner wall (6), wherein the outer cavity (7) is arranged radially from the central axis (MA) of the base body (2) towards the inner cavity (5).

7. The belt tensioning roller set according to claim 6, **characterised in that**, in at least one of the belt tensioning rollers (1), a reinforcement (9) of the base body (2) in the form of internal reinforcing ribs (15) is located in the outer cavity (7).

8. The belt tensioning roller set according to claim 7, **characterised in that** various reinforcements (15) are formed alternately in the circumferential direction of the outer cavity (7) within said cavity (7).

9. The belt tensioning roller set according to either claim 7 or 8, **characterised in that**, in the extension of an inner reinforcing rib (15) of the outer cavity (7), there is an additional outer reinforcing rib (14) extending to the inner wall (6), located outside both cavities (5, 7).

10. The belt tensioning roller set according to any one of claims 6 to 9, **characterised in that** at least one of the base bodies (2) has a one-sided rim (17) on its belt-supporting wall (8).

11. The belt tensioning roller set according to any one of claims 6 to 10, **characterised in that** at least one of the base bodies (2) has rims (17, 18) on both sides of its belt-supporting wall (8).

## Revendications

1. Procédé de production de galets tendeurs de courroie (1) comportant respectivement un corps de base (2) présentant un axe central (MA) qui est destiné à recevoir un roulement (10) retenu dans une paroi intérieure (6) du corps de base (2), **caractérisé en ce que** chaque corps de base (2) présente deux cavités (5, 7) comportant une forme de base torique, à savoir une cavité extérieure (7) délimitée par une paroi de support de courroie (8) et une cavité intérieure (5) délimitée dans la direction de l'axe central (MA) par la paroi intérieure (6), dans lequel la cavité extérieure (7) est disposée de manière à suivre radialement la cavité intérieure (5) à partir de l'axe central (MA), dans lequel sur la base d'une telle forme de base de galet (GF) uniforme, par diverses modifications de la forme de base de galet (GF), différents corps de base (2) de galets tendeurs de courroie (1), présentant respectivement au moins un renfort (9), sont fabriqués par fabrication additive.

2. Procédé selon la revendication 1, **caractérisé en ce que** divers renforts (9) sous la forme de traverses de renfort intérieures (15) complétant la forme de base de galet (GF) sont produits dans la cavité extérieure (7).

3. Procédé selon la revendication 2, **caractérisé en ce qu'**au moins un renfort (9) est produit sous la forme de traverses de renfort extérieures (14) complétant la forme de galet de base (GF), qui sont situées à l'extérieur des cavités (5, 7) et chaque traverse de renfort extérieure (14) forme un prolongement d'une traverse de renfort intérieure (15).

4. Procédé selon l'une des revendications 1 à 3, **caractérisé en ce qu'**au moins un renfort (9) est réalisé sous la forme d'un épaississement de la paroi.

5. Procédé selon l'une des revendications 1 à 4, **caractérisé en ce que** le corps de base (2) est construit à partir d'un matériau en poudre, dans lequel des ouvertures (16) pour le dépoudrage, qui sont ouvertes dans la direction de l'axe central (MA) du corps de base (2), sont laissées ouvertes dans le corps de base (2).

6. Ensemble de galets tendeurs de courroie (1) comprenant une pluralité de corps de base (2) différents, respectivement produit selon le procédé selon l'une des revendications 1 à 5, qui sont destinés à recevoir un roulement (10) retenu dans une paroi intérieure (6) du corps de base (2), **caractérisé en ce que** chaque corps de base (2) présente deux cavités (5, 7) comportant une forme de base torique, à savoir une cavité extérieure (7) délimitée par une paroi de support de courroie (8) et une cavité intérieure (5) délimitée dans la direction de l'axe central (MA) par la paroi intérieure (6), dans lequel la cavité extérieure (7) est disposée radialement de manière à suivre la cavité intérieure (5) à partir de l'axe central (MA) du corps de base (2).

7. Ensemble de galets tendeurs de courroie selon la revendication 6, **caractérisé en ce que** dans au moins un des galets tendeurs de courroie (1), un renfort (9) du corps de base (2) sous la forme de traverses de renfort intérieures (15) est situé dans la cavité extérieure (7).

8. Ensemble de galets tendeurs de courroie selon la revendication 7, **caractérisé en ce que** dans la direction circonférentielle de la cavité extérieure (7), différents renforts (15) sont formés alternativement dans cette cavité (7).

9. Ensemble de galets tendeurs de courroie selon la revendication 7 ou 8, **caractérisé en ce qu'**une traverse de renfort extérieure supplémentaire (14) s'étendant jusqu'à la paroi intérieure (6) est située à l'extérieur des deux cavités (5, 7) respectivement dans le prolongement d'une traverse de renfort intérieure (15) de la cavité extérieure (7).

10. Ensemble de galets tendeurs de courroie selon l'une des revendications 6 à 9, **caractérisé en ce qu'**au moins un des corps de base (2) présente un rebord unilatéral (17) sur sa paroi de support de courroie(8).

11. Ensemble de galets tendeurs de courroie selon l'une des revendications 6 à 10, **caractérisé en ce qu'**au moins un des corps de base (2) présente des rebords bilatéraux (17, 18) sur sa paroi de support de courroie (8).
